# EUROPÄISCHE PATENTSCHRIFT

(11) **EP 1 235 989 B1**
(45) Veröffentlichungstag und Bekanntmachung des Hinweises auf die Patenterteilung: **22.10.2003**
(21) Anmeldenummer: 00976021.6
(22) Anmeldetag: 10.11.2000
(51) Int. Cl.: F16C 11/06, G05G 9/047

(54) **LAGER FÜR EINEN SCHWENKBAREN HEBEL**
BEARING FOR A SWINGABLE LEVER
PALIER POUR LEVIER PIVOTANT

(30) Priorität: 04.12.1999 DE 19958502
(43) Veröffentlichungstag der Anmeldung: 04.09.2002
(73) Patentinhaber: INA-Schaeffler KG, 91074 Herzogenaurach (DE)
(72) Erfinder: SPALTHOFF, Eberhard, 33615 Bielefeld (DE)
(86) Internationale Anmeldenummer: EP0011151
(87) Internationale Veröffentlichungsnummer: WO01040669

(56) Entgegenhaltungen:
- EP-A- 0 428 064
- EP-A- 0 498 205
- DE-A- 3 341 878
- DE-A- 19 736 106
- GB-A- 827 333
- GB-A- 2 100 337
- US-A- 3 801 169
- US-A- 4 076 344

## Beschreibung

### Gebiet der Erfindung

Die Erfindung betrifft ein Lager für einen schwenkbaren Hebel, welches den Hebel schwenkbar lagert und welches zumindest durch eine Gelenkkugel sowie eine die Gelenkkugel zumindest teilweise umgreifende Lagerschale und ein radial von außen auf die Lagerschale wirkendes, radial nach innen vorgespanntes sowie ringförmiges Spannelement gebildet ist.

### Hintergrund der Erfindung

Unter schwenkbaren Hebeln sind alle die Anordnungen wie Schalthebel, Schwenkhebel oder Stütz- bzw. Umlenkhebel eines in der Kraftfahrzeugtechnik und im Maschinenbau eingesetzten Schaltsystems mit einer im Oberbegriff des Anspruchs 1 beschriebenen Lagerung zu verstehen. So ist in DE 197 36 106 A1 ein Schalthebel beschrieben, der mittels eines Außenringes gegen Schwingungen gedämpft auf einem Lager der gattungsbildenden Art sitzt. Das Lager ist durch eine Lagerschale gebildet, die mit einer kalottenförmigen Innenmantelfläche eine Gelenkkugel umfasst. Die Lagerschale ist mit mehreren über den Umfang verteilten und bis in die kalottenförmige Innenmantelfläche reichenden Schlitzen versehen. Durch diese Schlitze ist ein Teil der Lagerschale in Zungen aufgeteilt, die die Gelenkkugel umgreifen. Die Zungen sind durch einen in einer umlaufenden Nut wirkenden sowie vorspannenden elastischen Ring gegen die Oberfläche der Gelenkkugel gespannt und geben bei Verschleiß aufgrund der Vorspannung nach. Das Gelenk bleibt dadurch immer spielfrei. Bei ihrer Montage wird die Lagerschale über die Gelenkkugel geknöpft, d. h., die Lagerschale wird unter Aufweitung eines engeren freien Durchmessers der Lagerschale durch radiales Auseinanderbiegen der Zungen über die Gelenkkugel gestülpt. Die beschriebene Lösung ist an sich, insbesondere für die Lagerung von gering und normal belasteten Hebeln gut geeignet. Bei höheren axialen Belastungen ist die Lagerschale durch die Schlitze geschwächt, verschleißt durch die erhöhte Flächenpressung relativ schnell und neigt zum ausknöpfen.

### Zusammenfassung der Erfindung

Aufgabe der Erfindung ist es daher, ein Lager zu schaffen, das für die Lagerung von hochbelasteten Hebeln ausgelegt ist und sich kostengünstig herstellen lässt.

Dieser Aufgabe wird wie im kennzeichnenden Teil des Anspruches 1 beschrieben gelöst. Die Lagerschale ist durch zwei Schalensegmente gebildet. Die Schalensegmente weisen an ihrem Innenmantel einen kalottenförmigen Bereich auf. Mit dem kalottenförmigen Bereich umgreifen die Schalensegmente die Gelenkkugel zumindest teilweise. Dabei sind die Schalensegmente axial einander gegenüberliegend angeordnet und zumindest mit einem axialen Ausgleichsabstand zueinander beabstandet. Jedes der Schalensegmente ist mit wenigstens zwei zu dem anderen Schalensegment weisenden, axial hervorstehende Klauen versehen. Die Klauen sind in Umfangsrichtung zueinander beabstandet an dem offenen Ende angeordnet bzw. ausgebildet.

Die zueinander in Umfangsrichtung beabstandeten Klauen eines jedes Schalensegmentes bilden zwischen sich einen Freiraum, der in Umfangsrichtung durch die Flanken der Klauen begrenzt ist. In diesen Freiraum greift jeweils zumindest teilweise eine Klaue des gegenüberliegenden Schalensegmentes, so dass in Umfangsrichtung gesehen abwechselnd die Klaue des einen Schalensegmentes zu einer Klaue des anderen Schalensegmentes benachbart angeordnet ist. Die Schalensegmente sind axial aneinander mittels der Klauen gesichert. Dabei bleiben sie jedoch zumindest um den Ausgleichsabstand aufeinander zubeweglich. Jede der Klauen ist axial zu dem gegenüberliegenden Schalensegment mit einem Freiraum angeordnet, der dem Ausgleichsabstand entspricht.

An jeder Klaue ist an der radial nach außen gewandten Seite eine Nut ausgebildet. Die Nut verläuft in Umfangsrichtung und ist in Umfangsrichtung gesehen zu den Flanken offen, d. h. sie weist in diese Richtung offene Enden auf. Die Nuten bilden, wenn die Schalensegmente mittels der Klauen ineinander greifen, an der Lagerschale eine umlaufende Ringnut. Dabei wird diese Ringnut auch als umlaufend betrachtet, wenn an den Übergangsstellen von einer Klaue des einen Schalensegmentes zu der benachbarten Klaue des anderen Schalensegmentes ein mehr oder weniger großer Spalt gebildet ist, der den eigentlichen Verlauf der Ringnut unterbricht.

Die Ringnut weist mehrere Engstellen auf. Diese Engstellen sind dadurch gebildet, dass jedes offene Ende der Nut des einen Schalensegmentes zu dem offenen Ende der Nut einer benachbarten Klaue des anderen Schalensegmentes axial versetzt angeordnet ist. Dieser Versatz entspricht zumindest dem anfangs erwähnten Ausgleichsabstand. Mittels dieses Versatzes wird erreicht, dass jeweils eine Kante einer Nut in den freien Nutquerschnitt der anderen Nut hineinragt und den Querschnitt damit verengt. Damit ist die Engstelle in ihrer axialen Ausdehnung, im Vergleich zur axialen Ausdehnung oder im Vergleich zu dem freien Querschnitt der Nut an ihren offenen Enden zumindest um das doppelte des Ausgleichsabstandes verringert. Dabei kann diese axiale Ausdehnung durch andere konstruktive Maßnahmen weiter reduziert sein.

Das Spannelement greift in die Ringnut ein. Sein auf die Nut wirkender Querschnitt ist so gestaltet, dass er in seiner axialen Ausdehnung zumindest breiter ist als die axiale Ausdehnung der Engstelle. Die radialen Vorspannkräfte zwängen den Ring in die Engstelle. Die radialen Vorspannkräfte werden in der Engstelle aufgrund des größeren Querschnittes des Vorspannelementes im Vergleich zum kleineren Querschnitt der Engstelle in axiale Kräfte umgesetzt. Die axialen Kräfte sind bestrebt, einander benachbarte Nuten in Umfangsrichtung zueinander fluchtend auszurichten und spannen die Lagerschalen somit gegeneinander vor. Die Lagerschalen stützen sich dabei mittels ihrer kalottenförmig ausgebildeten Bereiche auf dem Außenmantel der Gelenkkugel ab. Die Lagerung der Gelenkkugel in der Lagerschale ist somit vorgespannt und spielfrei. Durch Verschleiß während des Betriebes des Schwenkhebels entstehendes Spiel in der Lagerschale wird mittels der gegeneinander vorgespannten Lagerschalen ausgeglichen. Dabei bewegen sich die Lagerschalen durch die Vorspannung des auf die Engstellen wirkenden Spannelementes axial aufeinander zu. Der Ausgleichsabstand ist also dem während des Betriebes des schwenkbaren Hebels zu erwartenden Verschleiß und Spiel beim Zusammenbau angepasst und sichert ab, dass das Lager innerhalb seiner geplanten Gebrauchsdauer spielfrei bleibt.

Die Schalensegmente sind vorzugsweise aus Kunststoff mit günstigen Gleiteigenschaften und guter Temperaturbeständigkeit hergestellt. Denkbar ist die Anwendung von Ultramit T als Werkstoff für seine Herstellung. Die Schalen können jedoch auch z. B. als metallische Sinter- oder Gußteile ausgebildet sein.

Der kalottenförmig ausgebildete Bereich eines jeden Schalensegmentes ist in seiner Ausdehnung den Erfordernissen der zu erwartenden Flächenpressung unter Belastung angepasst ausglegbar. Große Anlageflächen an der Gelenkkugeloberfläche und dicke Wandungsquerschnitte der Schalensegmente gestatten hohe Belastungen des Gelenkes.

Die Klauen haben verschiedene Funktionen. An jedem Schalensegment müssen mindestens zwei Klauen ausgebildet sein. Vorteilhaft ist jedoch, wenn mehr als zwei derartige Klauen am Umfang eines Schalensegmentes angeordnet sind. Ihre geometrische Ausführung ist variabel gestaltbar und soll hauptsächlich absichern, dass die Nuten aller ineinandergreifenden Klauen beider Schalensegmente an der Lagerschale eine Ringnut mit den o. g. Engstellen entsteht. Die Klauen ziehen die Schalensegmente unter Wirkung des Spannelementes in den Engstellen der Nut aufeinander zu. Weiterhin sichern die Klauen die Schalensegmente aneinander gegen Verdrehen in Umfangsrichtung. Vorzugsweise sind die Schalensegmente auch mittels der Klauen in axialer Richtung aneinander gesichert. Dabei ist den Schalensegmenten für Bewegungen aufeinander zu, zumindest zum Ausgleich des Spieles bei der Montage und infolge Verschleißes, ein Freiraum zu lassen. Dieser Freiraum entspricht dem Ausgleichsabstand. Bewegungen der Schalensegmente voneinander weg werden vorzugsweise mittels der Klauen verhindert. Es ist aber auch denkbar, die Schalensegmente ohne Zuhilfenahme der Klauen radial und/oder axial von außen in axiale Richtung aneinander zu sichern. Denkbar ist, z. B. die Schalensegmente axial in einem Außenring zu fixieren.

Wie anfangs schon erwähnt, sorgen die in den Engstellen entstehenden und durch die radiale Vorspannung des Spannelementes hervorgerufenen Kräfte für das axiale Verspannen der Schalensegmente gegeneinander. Dieser Effekt kann verstärkt werden, wenn, wie eine Ausgestaltung der Erfindung vorsieht, der Querschnitt der Nut sich ausgehend vom radial nach außen gerichteten Rand der Nut zum Nutgrund hin verengt. Dabei kann die Kontur der Wandung der Nut im Querschnitt gesehen vom Rand aus geradlinig schräg in Richtung Boden verlaufen oder beliebig gekrümmte Verläufe aufweisen. Tangentiale und radiale Kräfte des Spannelementes werden an den Wandungsschrägen teilweise in axiale Kraftkomponenten zerlegt. An den Übergangsstellen zwischen benachbarten Klauen wirken diese axialen Kraftkomponenten zusätzlich zu den mittels der Engstellen erzeugten Kraftkomponenten und erhöhen die Vorspannung der Schalensegmente gegeneinander.

Es ist in einer bevorzugten Ausgestaltung der Erfindung vorgesehen, wie schon erwähnt, die Klauen zur axialen Sicherung der Schalensegmente aneinander zu nutzen. Die Klauen eines Schalensegmentes hintergreifen dabei jeweils mit zumindest einer radial nach innen gerichteten Schnappnase einen in dem Freiraum angeordneten sowie von dem anderen Schalenelement ausgehenden, radial nach außen gerichteten und mit der Schnappnase kooperierenden Absatz. Bei der Montage des Gelenkes und seiner Lagerung, werden die Schalensegmente über die Gelenkkugel gestülpt und miteinander verschnappt. Mit derartig gestalteten Schalensegmenten ist die Montage eines erfindungsgemäßen Lagers einfach und kostengünstig.

Ebenso einfach und kostengünstig wie über die Klauen, sind die Schalensegmente mittels des Spannelementes axial aneinander gesichert. Das Spannelement muss dazu mit ausreichender Kraft in Umfangsrichtung und radial auf die Ringnut der Lagerschale wirken. Denkbar ist auch eine Kombination, bei der Klauen und ein Spannelement miteinander sichernd wirken. Das ist insbesondere dann denkbar, wenn das Spannelement durch einen metallischen sowie federnd vorspannenden Ring gebildet ist. Das Ausknöpfen der Lagerschale kann mit derartigen Mitteln auch bei hohen Lagerbelastungen verhindert werden.

Vorzugsweise ist das Spannelement jedoch durch einen elastischen Gummiring gebildet. Ein elastischer Gummiring erzeugt außer den radialen Vorspannkräften auch tangentiale Umfangsspannungen, die eine gleichmäßige Vorspannung absichern. Ein Gummiring passt sich mit seinem elastisch veränderbaren Querschnitt besser an die Engstellen der Ringnut an. Seine Wirkung auf die Engstellen ist somit besser, auch dann, wenn der Ring an den Übergangsstellen aufgrund bestehender Spalte auf Scherung beansprucht ist. Die Scherbelastung des Gummis erzeugt in dem Gummiring zusätzliche Zugkräfte von denen Anteile wiederum die axialen Vorspannkräfte erhöhen. Der Sitz und die axiale Spannung des Gummiringes sind über die Gestaltung der Nut beeinflußbar. Die Nuten sind in einer Ausgestaltung der Erfindung so ausgelegt, dass ihr Querschnitt sich zu den offenen Enden hin verengt.

Die Herstellkosten für ein derartiges Lager sind insbesondere dann günstig, wenn beide Lagerschalen, wie eine vorzugsweise Ausgestaltung vorsieht, durch zwei ringförmige sowie einander identisch ausgebildete Schalensegmente gebildet ist. Die Klauen jedes Schalensegmentes sind dabei in gleichmäßigen Abständen zueinander angeordnet und geometriegleich zueinander ausgeführt. Die kalottenförmige Innenmantelfläche ist so groß wie möglich gestaltet und erstreckt sich so dicht wie möglich bis an die Quermittelebene. Die Schalensegmente sind nur noch durch den Ausgleichsabstand voneinander getrennt. Durch den Hebel in das Lager eingebrachte Radial- und Axialkräfte sind in diesem Falle von geschlossenen Ringteilen aufgenommen. Die entstehenden Flächenpressungen sind gering. Für die Herstellung beider Schalensegmente wird aufgrund ihrer identischen Ausbildung nur ein Werkzeug benötigt. Die Herstellkosten für Lager mit derartig gestalteten Lagerschalen sind geringer und so auch deren Kosten für Lagerhaltung und Logistik.

Weiterhin ist vorgesehen, den durch den Ausgleichsabstand gebildeten Raum oder die dadurch entstehenden Spalten zwischen den Schalensegmenten als Speicher für Schmierstoff zu nutzen. Das ist insbesondere dann vorteilhaft, wenn als Schmierstoff Fett genutzt ist. Das in diesen Spalten bzw. Zwischenräumen gespeicherte Fett gibt Schmieröl an die zu schmierenden Flächen. Dadurch, dass sich der Spalt bei Verschleiß und Spielnachstellung durch die Bewegung der Schalensegmente aufeinander zu verengt, wird der Schmierstoff aus diesem Spalt in den zu schmierenden Bereich kontinuierlich verdrängt.

Vorzugsweise ist der Ausgleichsabstand mit einem Maß von 0,2 bis 1,0 mm angegeben.

Ein Lager gemäß Erfindung ist für die Lagerung eines Hebels, der fest mit der Gelenkkugel verbunden ist, genauso geeignet wie für die Lagerung eines Hebels, der mittels einem Außenring die Lagerschale zumindest teilweise umgreift. Wenn der Hebel mit der Gelenkkugel verbunden ist, sind die Lagerschalen ortsfest an z. B. einem Gehäuse angeordnet. Sitzt der Hebel auf einem die Lagerschalen umgreifenden Außenring, so bildet die Gelenkkugel den ortsfesten Punkt. Es ist in beiden Fällen sinnvoll die Lagerschale bzw. die Schalensegmente von Schwingungen weiterer Anschlußteile mittels zwischengelagerter Dämpfungselemente zu entkoppeln.

### Kurze Beschreibung der Zeichnung

Die Erfindung wird nachfolgend anhand von Ausführungsbeispielen erläutert. Es zeigen:
- Figur 1: ein Ausführungsbeispiel eines schwenkbaren Hebels;
- Figur 2: ein Ausführungsbeispiel eines erfindungsgemäßen Lagers im Schnitt;
- Figur 3: ein Ausführungsbeispiel eines Schalenelementes eines erfindungsgemäßen Lagers;
- Figur 4: die Lage von Schalensegmenten vor ihrer Montage zu einem erfindungsgemäßen Lager;
- Figur 5: ineinandergreifende Schalenelemente eines erfindungsgemäßen Lagers;
- Figur 6: die Schalenelemente aus Figur 5 mit einem Spannelement vorgespannt und
- Figur 7: ein Ausführungsbeispiel eines Schalenelementes, dessen Nutquerschnitt zu seinen offenen Enden verengt ist.

### Detaillierte Beschreibung der Zeichnung

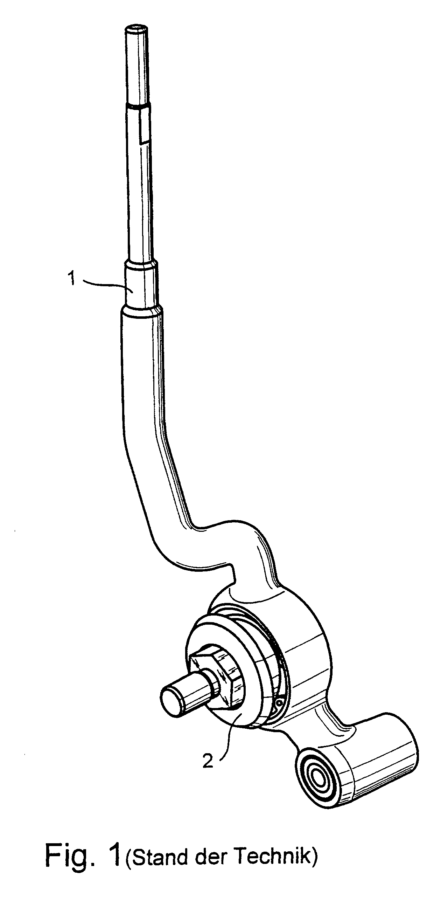

Figur 1 zeigt einen schwenkbaren Hebel 1 der um ein Lager 2 schwenkbar angeordnet ist. Das Lager 2 kann sowohl durch ein Ausführungsbeispiel eines Lagers nach dem Stand der Technik als auch durch ein erfindungsgemäßes Lager gebildet sein.

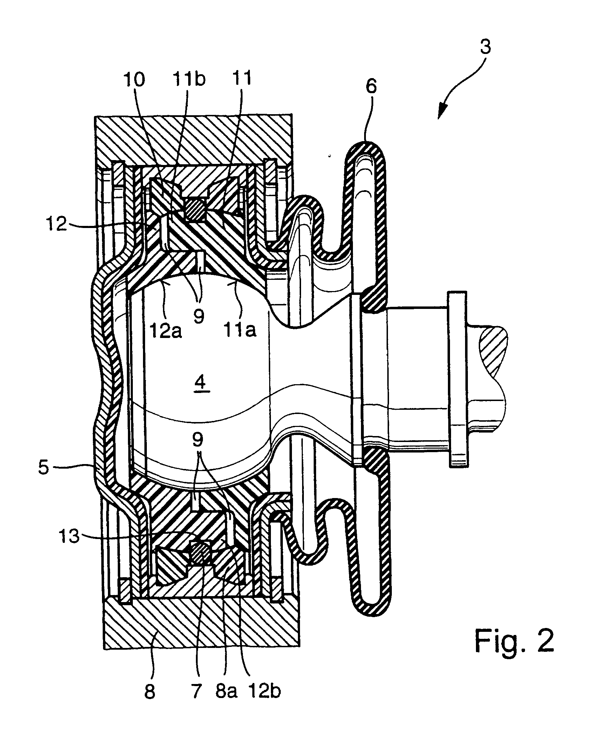

In Figur 2 ist mit 3 ein Ausführungsbeispiel eines Lagers gemäß Erfindung beschrieben. Das Lager 3 ist durch eine Gelenkkugel 4, eine Lagerschale 10, ein Spannelement 7 und einen Außenring 8 gebildet. Der Außenring 8 sitzt mittels eines Dämpfungselementes 8a auf der Lagerschale 10. Das Lager 3 ist zur einen Seite mittels eines Abdeckbleches 5 und zur anderen Seite mittels einer Manschette 6 abgedichtet. Die Lagerschale 10 ist durch ein Schalensegment 11 und ein weiteres Schalensegment 12 gebildet. Die Schalensegmente 11, 12 greifen axial mit Klauen 11b, 12b ineinander und sind mit dem Ausgleichsabstand 9 axial aufeinander zu beweglich angeordnet. Dabei liegen die Schalensegmente 11, 12 mit jeweils einem kalottenförmig ausgebildeten Bereich 11a, 12a an der Gelenkkugel 4 an. Der kalottenförmig ausgebildete Bereich 11a erstreckt sich in diesem Beispiel, bis auf einen der Hälfte des Ausgleichsabstandes 9 entsprechenden Abstand, bis an die Quermittelebene der Gelenkkugel 4. Das Spannelement 7 greift in eine an den Klauen 11b, 12b gebildete Ringnut 13 ein und spannt die Schalensegmente 11, 12 axial gegeneinander vor und sichert die Schalensegmente 11, 12 aneinander.

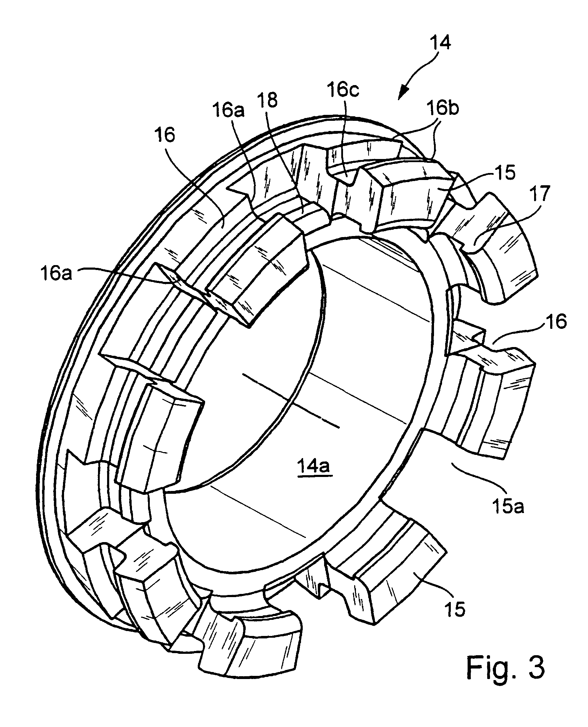

Figur 3 zeigt ein Schalensegment 14 zu einem nicht weiter dargestellten erfindungsgemäßen Lager. Das Schalensegment 14 ist ringförmig ausgebildet und weist an seinem Innenmantel einen kalottenförmig ausgebildeten Bereich 14a auf. Aus dem Schalensegment 14 stehen axial Klauen 15 hervor. Die einzelnen Klauen 15 des Schalensegmentes 14 sind mit gleichmäßiger Teilung zueinander angeordnet sowie von gleicher Geometrie. Die Klauen 15 begrenzen in Umfangsrichtung einen Freiraum 15a. Jede der Klauen 15 weist an ihrer radial nach außen gewandten Seite eine in Umfangsrichtung verlaufende Nut 16 mit in beiden Umfangsrichtungen offenen Enden 16a auf. Der Querschnitt der Nut 16 verengt sich ausgehen vom äußeren Rand 16b zum Nutgrund 16c hin. Jede der Klauen 15 ist mit einer radial nach innen gerichteten Schnappnase 17 versehen.

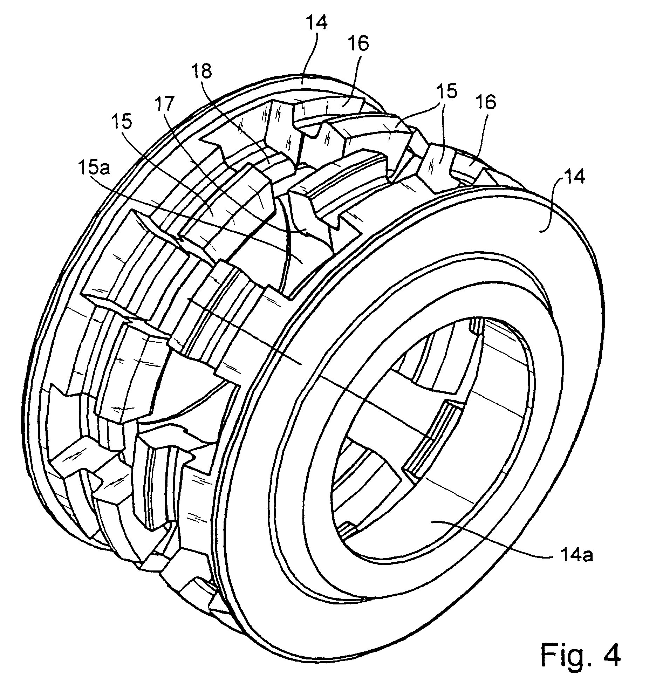

Figur 4 bis Figur 6 zeigen wie zwei ringförmige sowie einander identisch ausgebildete Schalensegmente zueinander angeordnet sind um eine Lagerschale zu bilden. Dabei ist diese Anordnung im Interesse der Übersichtlichkeit der Darstellung von weiteren Lagerteilen freigemacht dargestellt.

Figur 4 zeigt wie sich zwei Schalensegmente 14 vor ihrer Montage einander gegenüberliegen. Dabei weisen die Klauen 15 des einen Schalensegmentes 14 auf den Freiraum 15a des weiteren Schalensegmentes 14. In dem Freiraum 15a ist ein Absatz 18 ausgebildet, der von dem Schalenelement 14 ausgeht. Der Absatz 18 ist radial nach außen gerichtet und in seiner Geometrie so ausgebildet, dass er von der Schnappnase 17 der gegenüberliegenden Klaue 15 hintergriffen werden kann.

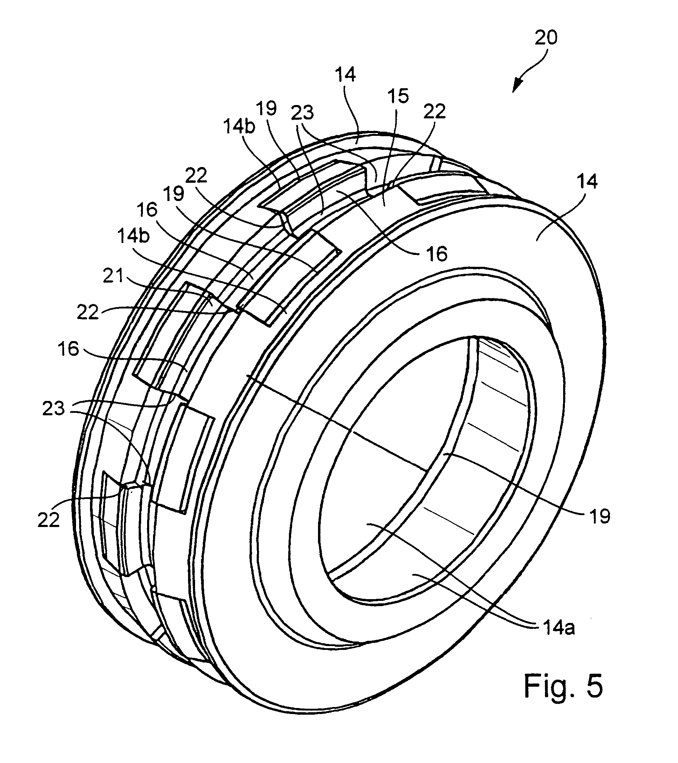

Figur 5 zeigt, wie die Schalensegmente 14 miteinander zu einer Lagerschale 20 verschnappt sind. Die Schalensegmente 14 stehen jetzt in der Stellung zueinander, mit der sie ein nicht dargestelltes Gelenk im montierten Zustand umgreifen. Dabei ist erkennbar, dass zwischen den offenen Enden 14b am Innenmantel der Schalensegmente 14 und zwischen den Stirnseiten der Klauen 15 und dem offenen Ende 14b ein axialer Freiraum für Bewegungen der Schalensegmente 14 aufeinander zu verbleibt. Dieser axiale Freiraum entspricht einem Ausgleichsabstand 19 für das Ausgleichen von Spiel und Verschleiß. Die Nuten 16 in den Klauen 15 bilden an der Lagerschale 20 eine Ringnut 21. Die Nuten 16 sind axial mit leichtem Versatz 22 zueinander angeordnet. Der Versatz 22 entspricht dem Ausgleichsabstand 19. Der Versatz 22 der Nuten 16 zueinander hat zur Folge, dass ein Teil der Wandung der Nut 16 des einen Schalensegmentes 14 in den freien Querschnitt der Ringnut 21 hineinragt und an den Übergangsstellen der benachbarten Klauen 15 eine Engstelle 23 bildet. Die Engstelle 23 ist in ihrer axialen Ausdehnung, im Vergleich zu der axialen Ausdehnung der Nuten 16 an ihren offenen Enden 16a somit um das doppelte des Ausgleichsabstandes 19 verringert.

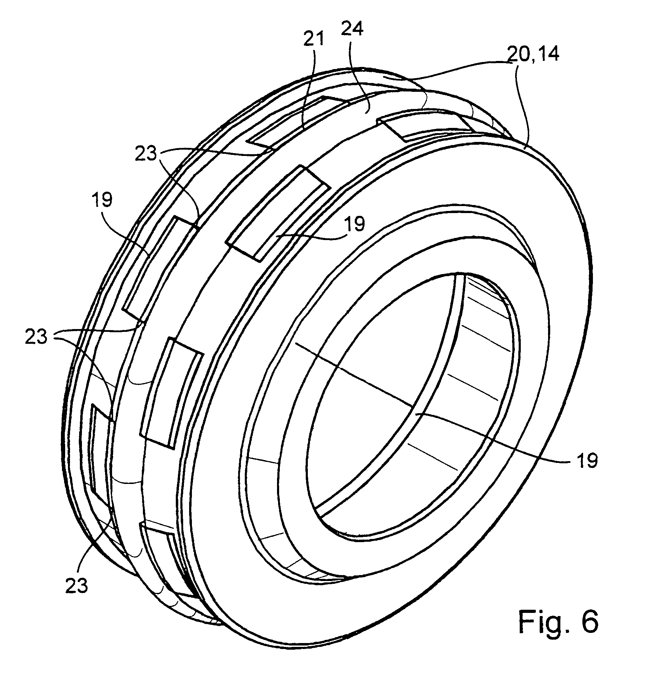

In Figur 6 ist dargestellt, wie in die Ringnut 21 der Lagerschale 20 ein Spannelement 24 in Form eines O-Ringes aus Gummi eingreift. Das Spannelement 24 wirkt axial auf die Engstelle 23 und ist bemüht die Schalensegmente 14 gegeneinander zu verschieben und dabei den Ausgleichsabstand 19 zu überwinden.

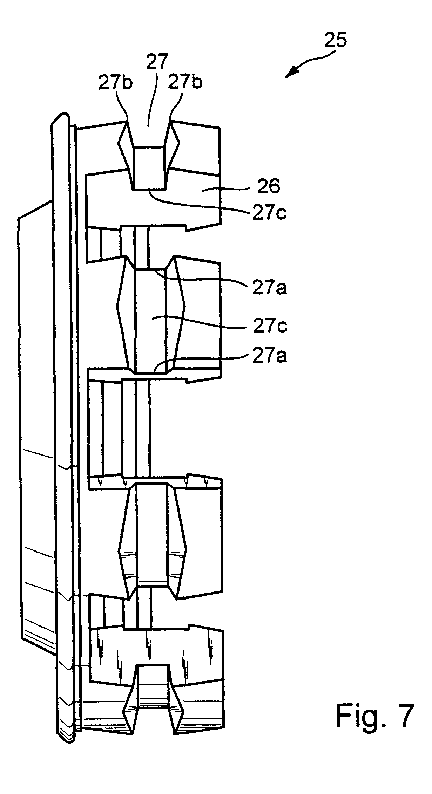

Figur 7 zeigt ein weiteres Ausführungsbeispiel eines Schalensegmentes 25 eines erfindungsgemäßen Lagers. Das Schalensegment 25 ist mit Klauen 26 versehen. An der radial nach außen gewandten Seite der Klauen 26 ist eine in Umfangsrichtung verlaufende Nut 27 mit in beide Umfangsrichtungen weisenden offenen Enden 27a ausgebildet. Der Querschnitt der Nut verengt sich in Richtung der offenen Enden 27a sowie von seinem äußeren Rand 27b zum Nutgrund 27c hin. Damit bilden die offenen Enden 27a den engsten Querschnitt der Nut 27.

### Bezugszahlen

- 1: Hebel
- 2: Lager
- 3: Lager
- 4: Gelenkkugel
- 5: Abdeckblech
- 6: Manschette
- 7: Spannelement
- 8: Außenring
- 8a: Dämpfungselement
- 9: Ausgleichsabstand
- 10: Lagerschale
- 11: Schalensegment
- 11 a: kalottenförmiger Bereich
- 11b: Klaue
- 12: weiteres Schalensegment
- 12a: kalottenförmiger Bereich
- 12b: Klaue
- 13: Ringnut
- 14: Schalensegment
- 14a: kalottenförmiger Bereich
- 14b: offenes Ende
- 15: Klaue
- 15a: Freiraum
- 16: Nut
- 16a: offenes Ende
- 16b: äußerer Rand
- 16c: Nutgrund
- 17: Schnappnase
- 18: Absatz
- 19: Ausgleichsabstand
- 20: Lagerschale
- 21: Ringnut
- 22: Versatz
- 23: Engstelle
- 24: Spannelement
- 25: Schalensegment
- 26: Klauen
- 27: Nut
- 27a: offenes Ende
- 27b: äußerer Rand
- 27c: Nutgrund

## Patentansprüche

1. Lager (2, 3) für einen schwenkbaren Hebel (1), welches den Hebel (1) schwenkbar lagert und welches zumindest durch eine Gelenkkugel (4) sowie eine die Gelenkkugel (4) zumindest teilweise umgreifende Lagerschale (10, 20) und ein radial von außen auf die Lagerschale (10, 20) wirkendes, radial nach innen vorgespanntes sowie ringförmiges Spannelement (7, 24) gebildet ist, **dadurch gekennzeichnet, dass**
- die Lagerschale (10, 20) durch zwei Schalensegmente (11, 12, 14, 25) gebildet ist,
- die Schalensegmente (11, 12, 14, 25) axial einander gegenüberliegen sowie zumindest mit einem axialen Ausgleichsabstand (9, 19) zueinander beabstandet die Gelenkkugel (4) mit je einem kalottenförmig ausgebildeten Bereich (11a, 12a, 14a) am Innenmantel wenigstens teilweise umgreifen und die Schalensegmente (11, 12, 14, 25) jeweils wenigstens zwei axial in Richtung des anderen Schalensegmentes (11, 12, 14, 25) hervorstehende sowie in Umfangsrichtung zueinander beabstandete Klauen (11b, 12b, 15, 26) aufweisen,
- die Klauen (15) jeweils zumindest teilweise in einen Freiraum (15a) eingreifen, der durch die Klauen (15) des gegenüberliegenden Schalenelementes (14) in Umfangsrichtung begrenzt ist, und dabei jeweils in Umfangsrichtung zu einer Klaue (15) des anderen Schalenelementes (14) benachbart angeordnet sind,
und dass
- die Schalensegmente (11, 12, 14), zumindest um den axialen Ausgleichsabstand (9, 19) axial aufeinander zu beweglich, aneinander axial gesichert sind und jede der Klauen (11b, 12b, 15) axial zu dem gegenüberliegenden Schalensegment (11, 12, 14) mindestens um den Ausgleichsabstand (9, 19) beabstandet angeordnet ist sowie
- die Klauen (11b, 12b, 15, 26) an einer radial nach außen gewandten Seite zumindest eine in Umfangsrichtung verlaufende Nut (16, 27) mit in beiden Umfangsrichtungen offenen Enden (16a, 27a) aufweisen und die Nuten (16, 27) der benachbart angeordneten Klauen (11b, 12b, 15) an der Lagerschale eine Ringnut (13, 21) mit Engstellen (23) bilden,
wobei
- jede der Engstellen (23) dadurch gebildet ist, dass jedes offene Ende (16a, 27a) eine Nut (16, 27) zu einem offenen Ende (16a, 27a) der Nut (16, 27) einer benachbarten Klaue (11b, 12b, 15) axial zumindest um den Ausgleichsabstand (9, 19) versetzt angeordnet ist,
- die Engstelle (23) in ihrer axialen Ausdehnung, im Vergleich zu der axialen Ausdehnung der Nut (16, 27) an ihren offenen Enden (16a, 27a), zumindest um das Doppelte des Ausgleichsabstandes (9, 19) verringert ist,
und wobei das Spannelement (7, 24) in die Ringnut (13, 21) eingreift und die Schalensegmente (11, 12, 14) axial gegeneinander über die Engstelle (23) vorspannt.

2. Lager nach Anspruch 1, **dadurch gekennzeichnet, dass** der Querschnitt der Nut (16, 27), ausgehend vom radial nach außen gerichteten Rand der Nut (16b, 27b), sich zum Nutgrund (16c, 27c) hin verengt.

3. Lager nach Anspruch 1, **dadurch gekennzeichnet, dass** die Schalensegmente (14) wenigstens mittels der Klauen (15) aneinander gesichert sind und dass die Klauen (15) eines Schalensegmentes (14) jeweils mit zumindest einer radial nach innen gerichteten Schnappnase (17) eines in dem Freiraum (15a) angeordneten, von dem anderen Schalenelement (14) ausgehenden sowie radial nach außen gerichteten und mit der Schnappnase (17) kooperierenden Absatzes (18) hintergreift.

4. Lager nach Anspruch 1, **dadurch gekennzeichnet, dass** die Schalenelemente (11, 12) axial durch das in der Ringnut (13) wirkende Spannelement (7) aneinander gesichert sind.

5. Lager nach Anspruch 1, **dadurch gekennzeichnet, dass** das Spannelement (7) durch einen metallisch federnd vorspannenden Ring gebildet ist.

6. Lager nach Anspruch 1, **dadurch gekennzeichnet, dass** das Spannelement (24) durch einen elastischen Gummiring gebildet ist.

7. Lager nach Anspruch 1, **dadurch gekennzeichnet, dass** der freie Querschnitt der Nut (27) sich in Umfangsrichtung gesehen zu den offenen Enden (27a) hin verengt.

8. Lager nach Anspruch 1, **dadurch gekennzeichnet, dass** die Lagerschale (20) durch zwei ringförmige sowie einander identisch ausgebildete Schalensegmente (14) mit mehreren am Umfang gleichmäßig zueinander angeordneten und geometriegleich ausgebildeten Klauen (11b, 12b, 15) gebildet ist und dass der kalottenförmig ausgebildete Bereich (11a, 12a, 24a) sich, bis auf einen zumindest der Hälfte des Ausgleichsabstandes (9, 19) entsprechenden Abstand, bis zur Quermittelebene der Gelenkkugel (4) hin erstreckt.

9. Lager nach Anspruch 1, **dadurch gekennzeichnet, dass** für den Ausgleichsabstand (9, 19) vorgesehene Spalte und Zwischenräume zwischen den Schalensegmenten (11, 12, 14) Speicher für Schmierstoff sind.

10. Lager nach Anspruch 1, **dadurch gekennzeichnet, dass** die Gelenkkugel (4) fest mit dem Hebel (1) verbunden ist.

11. Lager nach Anspruch 1, **dadurch gekennzeichnet, dass** der Ausgleichsabstand (9, 19) einem axialen Maß von 0,2 bis 1,0 mm entspricht.

## Claims

1. Bearing (2, 3) for a pivotable lever (1), the former bearing the lever (1) in a pivotable manner and being formed at least by a joint ball (4) and a bearing shell (10, 20), which at least partially engages around the joint ball (4), and a radially inwardly prestressed and annular clamping element (7, 24), which acts radially on the bearing shell (10,20) from the outside, **characterized in that**
- the bearing shell (10, 20) is formed by two shell segments (11, 12, 14, 25),
- the shell segments (11, 12, 14, 25) are located axially opposite one another and, spaced apart from one another at least by an axial compensating spacing (9, 19), engage, at least in part, around the joint ball (4) by way of a dome-shaped region (11a, 12a, 14a) in each case on the inner lateral surface, and the shell segments (11, 12, 14, 25) each have at least two circumferential spaced-apart claws (11b, 12b, 15, 26) projecting axially in the direction of the other shell segment (11, 12, 14, 25),
- the claws (15) each engage, at least in part, in a clearance (15a), which is bounded in the circumferential direction by the claws (15) of the opposite shell element (14), and are adjacent to a claw (15) of the other shell element (14), as seen in the circumferential direction,
and **in that**
- the shell segments (11, 12, 14), which can be moved axially towards one another at least by the axial compensating spacing (9, 19), are secured axially on one another, and each of the claws (11b, 12b, 15) is spaced apart axially, at least by the compensating spacing (9, 19), from the opposite shell element (11, 12, 14) and
- the claws (11b, 12b, 15, 26), on a radially outwardly facing side, have at least one circumferentially running groove (16, 27) with ends (16a, 27a) which are open in both circumferential directions, and the grooves (16, 27) of the adjacent claws (11b, 12b, 15) on the bearing shell form an annular groove (13, 21) with constrictions (23),
it being the case that
- each of the constrictions (23) is formed **in that** each open end (16a, 27a) of one groove (16, 27) is offset axially, at least by the compensating spacing (9, 19), in relation to an open end (16a, 27a) of the groove (16, 27) of an adjacent claw (11b, 12b, 15),
- the constriction (23), over its axial extent, is reduced, at least by double the compensating spacing (9, 19), in comparison to the axial extent of the groove (16, 27) at its open ends (16a, 27a),
and that the clamping element (7, 24) engages in the annular groove (13, 21) and prestresses the shell segments (11, 12, 14) axially in relation to one another via the constriction (23).

2. Bearing according to Claim 1, **characterized in that** the cross section of the groove (16, 27), starting from the radially outwardly directed border of the groove (16b, 27b), narrows in the direction of the groove base (16c, 27c).

3. Bearing according to Claim 1, **characterized in that** the shell segments (14) are secured on one another at least by means of the claws (15), and **in that** the claws (15) of one shell segment (14) each engage, by way of at least one radially inwardly directed snap-action nose (17), behind a radially outwardly directed shoulder (18) which is arranged in the clearance (15a), extends from the other shell element (14) and cooperates with the snap-action nose (17).

4. Bearing according to Claim 1, **characterized in that** the shell elements (11, 12) are secured axially on one another by the clamping element (7) acting in the annular groove (13).

5. Bearing according to Claim 1, **characterized in that** the clamping element (7) is formed by a metallically resiliently prestressing ring.

6. Bearing according to Claim 1, **characterized in that** the clamping element (24) is formed by an elastic rubber ring.

7. Bearing according to Claim 1, **characterized in that** the free cross section of the groove (27) narrows in the direction of the open ends (27a), as seen in the circumferential direction.

8. Bearing according to Claim 1, **characterized in that** the bearing shell (20) is formed by two annular and identical shell segments (14) with a plurality of claws (11b, 12b, 15) which are of the same geometry and are arranged uniformly in relation to one another on the circumference, and **in that** the dome-shaped region (11a, 12a, 24a), apart from the spacing corresponding to at least half the compensating spacing (9, 19), extends as far as the transverse centre plane of the joint ball (4).

9. Bearing according to Claim 1, **characterized in that** gaps and interspaces which are provided for the compensating spacing (9, 19) between the shell segments (11, 12, 14) form stores for lubricant.

10. Bearing according to Claim 1, **characterized in that** the joint ball (4) is fixed to the lever (1).

11. Bearing according to Claim 1, **characterized in that** the compensating spacing (9, 19) corresponds to an axial dimension of 0.2 to 1.0 mm.

## Revendications

1. Palier (2, 3) pour un levier pivotant (1), lequel supporte le levier (1) de manière à ce qu'il puisse pivoter et lequel est constitué d'au moins une rotule (4) ainsi que d'une coque de palier (10, 20) qui entoure au moins partiellement la rotule (4) et d'un élément de serrage (7, 24) précontraint vers l'intérieur dans le sens radial et de forme annulaire qui agit dans le sens radial depuis l'extérieur sur la coque de palier (10, 20), **caractérisé en ce que**
- la coque de palier (10, 20) est constituée de deux segments de coque (11, 12, 14, 25),
- les segments de coque (11, 12, 14, 25) sont disposés face à face l'un par rapport à l'autre dans le sens axial et entourent au moins partiellement la rotule (4) avec au moins un écart de compensation axial (9, 19) l'un par rapport à l'autre à chaque fois avec une zone en forme de calotte (11a, 12a, 14a) au niveau de la chemise intérieure et les segments de coque (11, 12, 14, 25) présentent à chaque fois au moins deux griffes (11b, 12b, 15, 26) en saillie dans le sens axial en direction de l'autre segment de coque (11, 12, 14, 25) et espacées l'une de l'autre dans le sens du pourtour,
- les griffes (15) pénètrent à chaque fois au moins partiellement dans un espace libre (15a) qui est délimité au niveau du pourtour par les griffes (15) de l'élément de coque opposé (14) et, à cette occasion, sont à chaque fois voisines dans le sens du pourtour à une griffe (15) de l'autre élément de coque (14),
et que
- les segments de coque (11, 12, 14) sont fixés l'un à l'autre de manière mobile dans le sens axial, l'un sur l'autre dans le sens axial au moins autour de l'écart de compensation axial (9, 19) et chacune des griffes (11b, 12b, 15) est écartée au moins de l'écart de compensation (9, 19) dans le sens axial par rapport au segment de coque opposé (11, 12, 14) et
- les griffes (11b, 12b, 15, 26) présentent, sur un côté dirigé vers l'extérieur dans le sens radial, au moins une rainure (16, 27) s'étendant dans le sens du pourtour aux extrémités (16a, 27a) ouvertes dans les deux sens du pourtour et les rainures (16, 27) des griffes voisines (11b, 12b, 15) forment sur la coque de palier une rainure annulaire (13, 21) comportant des rétrécissements (23),
- chacun des rétrécissements (23) étant configuré **en ce que** chaque extrémité ouverte (16a, 27a) d'une rainure (16, 27) est décalée dans le sens axial au moins de l'écart de compensation (9, 19) par rapport à une extrémité ouverte (16a, 27a) de la rainure (16, 27) d'une griffe voisine (11b, 12b, 15),
- le rétrécissement (23) est réduit dans son extension axiale au moins du double de l'écart de compensation (9, 19) en comparaison de l'extension axiale de la rainure (16, 27) au niveau de ses extrémités ouvertes (16a, 27a),
et l'élément de serrage (7, 24) pénétrant dans la rainure annulaire (13, 21) et précontraint les segments de coque (11, 12, 14) dans le sens axial les uns par rapport aux autres par le biais du rétrécissement (23).

2. Palier selon la revendication 1, **caractérisé en ce que** la section de la rainure (16, 27) se rétrécit en direction du fond de la rainure (16c, 27c) en partant du bord de la rainure (16b, 27b) dirigé vers l'extérieur dans le sens radial.

3. Palier selon la revendication 1, **caractérisé en ce que** les segments de coque (14) sont fixés l'un à l'autre au moins à l'aide des griffes (15) et que les griffes (15) d'un segment de coque (14) s'engagent respectivement avec au moins un tenon d'accrochage (17) dirigé vers l'intérieur dans le sens radial d'un talon (18) disposé dans l'espace libre (15a), partant de l'autre élément de coque (14), dirigé vers l'extérieur dans le sens radial et coopérant avec le tenon d'accrochage (17).

4. Palier selon la revendication 1, **caractérisé en ce que** les éléments de coque (11, 12) sont fixés l'un à l'autre dans le sens axial par l'élément de serrage (7) qui agit dans la rainure annulaire (13).

5. Palier selon la revendication 1, **caractérisé en ce que** l'élément de serrage (7) est formé par une bague de précontrainte métallique à effet ressort.

6. Palier selon la revendication 1, **caractérisé en ce que** l'élément de serrage (24) est formé par une bague élastique en caoutchouc.

7. Palier selon la revendication 1, **caractérisé en ce que** la section libre de la rainure (27), vue dans le sens du pourtour, se rétrécit vers les extrémités ouvertes (27a).

8. Palier selon la revendication 1, **caractérisé en ce que** la coque de palier (20) est formée par deux segments de coque (14) de forme annulaire et de configuration identique l'un par rapport à l'autre munis de plusieurs griffes (11b, 12b, 15) disposées à intervalles réguliers l'une par rapport à l'autre sur le pourtour et de configuration géométriquement identique et que la zone en forme de calotte (11a, 12a, 24a) s'étend jusqu'au plan central transversal de la rotule (4) sur une distance qui correspond au moins à la moitié de l'écart de compensation (9, 19).

9. Palier selon la revendication 1, **caractérisé en ce que** la fente et les espaces intermédiaires prévus pour l'écart de compensation (9, 19) entre les segments de coque (11, 12, 14) sont des réserves pour du lubrifiant.

10. Palier selon la revendication 1, **caractérisé en ce que** la rotule (4) est fixée à demeure au levier (1).

11. Palier selon la revendication 1, **caractérisé en ce que** l'écart de compensation (9, 19) correspond à une cote maximale comprise entre 0,2 et 1,0 mm.
